(19) Europäisches Patentamt
European Patent Office
Office européen des brevets

(11) **EP 3 968 243 A1**

(12) **EUROPEAN PATENT APPLICATION**
published in accordance with Art. 153(4) EPC

(43) Date of publication:
**16.03.2022 Bulletin 2022/11**

(21) Application number: **20834260.0**

(22) Date of filing: **05.07.2020**

(51) International Patent Classification (IPC):
**G06N 20/00** (2019.01)

(52) Cooperative Patent Classification (CPC):
**G06N 20/00**

(86) International application number:
**PCT/CN2020/100308**

(87) International publication number:
**WO 2021/000958 (07.01.2021 Gazette 2021/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.07.2019 CN 201910600521**

(71) Applicant: **Huawei Technologies Co., Ltd.
Longgang District
Shenzhen,
Guangdong 518129 (CN)**

(72) Inventors:
• **SUN, Xudong**
**Shenzhen, Guangdong 518129 (CN)**
• **ZHANG, Yanfang**
**Shenzhen, Guangdong 518129 (CN)**
• **ZHANG, Liang**
**Shenzhen, Guangdong 518129 (CN)**
• **LIU, Shucheng**
**Shenzhen, Guangdong 518129 (CN)**
• **WANG, Yali**
**Shenzhen, Guangdong 518129 (CN)**

(74) Representative: **Epping - Hermann - Fischer
Patentanwaltsgesellschaft mbH
Schloßschmidstraße 5
80639 München (DE)**

(54) **METHOD AND APPARATUS FOR REALIZING MODEL TRAINING, AND COMPUTER STORAGE MEDIUM**

(57) A method and an apparatus for implementing model training, and a computer storage medium are disclosed, and belong to the field of machine learning. When a machine learning model deteriorates, an analysis device first obtains validity information of a first feature set, where the first feature set includes a plurality of features used for training to obtain the machine learning model, the validity information includes a validity score of each feature in the first feature set, and a validity score of a feature is negatively related to correlation of the feature with another feature in the first feature set. Then an invalid feature in the first feature set is determined based on the validity information. A second feature set that does not include the invalid feature is finally generated, where the second feature set is used to retrain the machine learning model. An invalid feature in the feature set is determined based on the validity score of the feature calculated based on correlation between the features, and there is no need to label sample data. This improves feature set update efficiency and model training efficiency.

FIG. 2

**Description**

**TECHNICAL FIELD**

This application relates to the machine learning field, and in particular, to a method and an apparatus for implementing model training, and a computer storage medium.

**BACKGROUND**

Machine learning means that a machine uses training samples for training to obtain a machine learning model, to make the machine learning model to be capable for predicting a category of data other than the training samples. In a specific practical task of machine learning, it is crucial to select a group of representative features to form a feature set to build a machine learning model. During feature selection, labeled sample data is usually used to select a feature set highly correlated with a category, to train the machine learning model. A label is used to identify a category of sample data.

After the machine learning model deteriorates, the machine learning model needs to be retrained to ensure performance of the machine learning model. A current process of retraining a machine learning model includes: obtaining a large amount of sample data and labeling the sample data; using a feature selection algorithm to calculate a correlation degree between each feature in a current feature set and a category based on labeled sample data; determining an invalid feature in the current feature set based on expert experience and the correlation degree between each feature and the category; after the invalid feature is removed from the current feature set, adding a new appropriate feature selected from a feature library to the feature set based on the expert experience, to obtain a new feature set; and retraining the machine learning model by using the new feature set and evaluating the machine learning model, until a model evaluation result meets an expected requirement.

However, a large amount of labeled sample data needs to be used in both training and retraining processes of the machine learning model, and a process of labeling the sample data is time-consuming. Therefore, current model training efficiency is relatively low.

**SUMMARY**

This application provides a method and an apparatus for implementing model training, and a computer storage medium, to resolve a current problem of relatively low model training efficiency.

According to a first aspect, a method for implementing model training is provided. When a machine learning model deteriorates, an analysis device obtains validity information of a first feature set, where the first feature set includes a plurality of features used for training to obtain the machine learning model, the validity information includes a validity score of each feature in the first feature set, and a validity score of a feature is negatively related to correlation of the feature with another feature in the first feature set. The analysis device determines an invalid feature in the first feature set based on the validity information. Finally, the analysis device generates a second feature set that does not include the invalid feature, and the second feature set is used to retrain the machine learning model.

In this application, unsupervised feature validity determining is implemented. After the machine learning model deteriorates, an invalid feature in the feature set may be determined based on the validity score of the feature calculated based on correlation between the features, without using labeled data to calculate a correlation degree between a feature and a label. Therefore, there is no need to label sample data in a feature set update process. This reduces manual intervention in the feature set update process, improves feature set update efficiency, and further improves efficiency of retraining the machine learning model.

Optionally, the validity score of the feature is obtained based on mutual information of the feature relative to all other features in the first feature set. For example, the validity score of the feature may be specifically a mean of mutual information of the feature relative to all the other features in the first feature set.

A larger value of mutual information of the feature relative to all the other features indicates a weaker correlation between the feature and the other features, and the feature includes more valid information. Therefore, the validity score of the feature obtained based on the mutual information of the feature relative to all the other features in the first feature set may reflect an information contribution degree of the feature to the feature set through the correlation between the features, and reliability is relatively high.

For example, the analysis device first extracts feature data of each feature in the first feature set from target data. Then, discretization processing is performed on the feature data of each feature to obtain a discrete feature value of each feature. Finally, validity scores of the features are calculated based on discrete feature values of all the features in the first feature set and an information entropy principle. For example, a validity score of a first feature is to be calculated, and a process of calculating the validity score of the feature includes: calculating an information entropy of the first feature based on a discrete feature value of the first feature; calculating a conditional entropy of the first feature relative to a second feature based on the discrete feature value of the first feature and a discrete feature value of the second feature, where the second feature is any feature in the first feature set other than the first feature; calculating mutual information of the first feature relative to the second feature based on the information entropy of the first feature and the conditional entropy of the first feature relative to the second feature; and calculating the validity score of the first feature based on mutual information between the first feature and all other features than the first feature in the first feature set.

Optionally, a validity score $S(t)$ of a first feature $t$ is calculated by using the following validity score formula:

$$S(t) = \frac{1}{L}\sum_{i=1}^{L} I(t; q_i)$$,

where $L$ represents a quantity of all the other features than the first feature in the first feature set; $qi$ represents an $i^{th}$ feature in all the other features; $I(t;qi)$ represents mutual information of the first feature relative to the $i^{th}$ feature; and both i and $L$ are positive integers.

In a possible implementation, the invalid feature includes a feature whose validity score is less than a score threshold in the first feature set.

Optionally, the score threshold is calculated based on one or more of a mean of validity scores of all features in the first feature set, a variance of validity scores of all features in the first feature set, and a standard deviation of validity scores of all features in the first feature set.

Because the score threshold is calculated based on the validity scores of all the features in the first feature set, score thresholds calculated for different feature sets or for a same feature set at different moments may be different, and can vary with the validity scores of the features in the feature set. Therefore, compared with a specified score threshold, the score threshold provided in this application can facilitate more accurate classification of the invalid feature and the valid feature.

In another possible implementation, the invalid feature includes several features with lowest validity scores in the first feature set. For example, the bottom 20% of features with lowest validity scores in the first feature set may be used as invalid features. After the validity information of the first feature set is obtained, all the features in the first feature set may be sorted in descending order of validity scores, and invalid feature flags are set for several features with lowest validity scores.

Optionally, after obtaining the validity information of the first feature set, the analysis device generates a validity score list of the first feature set based on the validity information, where the validity score list includes a feature identifier and validity indication information of each feature in the first feature set, the validity indication information includes at least one of a validity score and a validity flag, and the validity flag includes a valid feature flag or an invalid feature flag. Then, the analysis device sends the validity score list to a management device. The management device may be an OSS or another network device connected to the analysis device. Optionally, when the analysis device that generates the validity score list has a display function, the analysis device may directly display the validity score list on a display interface of the analysis device to an expert for viewing and/or modification.

Optionally, the validity indication information includes the validity score and the validity flag, and the method further includes:

The analysis device receives an updated validity score list sent by the management device, and determines a feature that is in the updated validity score list and whose validity flag is an invalid feature flag as the invalid feature in the first feature set.

In this application, an expert may view the validity score list, and modify the validity flag in the validity score list, for example, modify a valid feature flag of a feature to an invalid feature flag, or modify an invalid feature flag of a feature to a valid feature flag. This is to adjust the valid feature and the invalid feature in the validity score list. The analysis device obtains the invalid feature from a finally confirmed validity score list. Therefore, in this application, flexibility of obtaining the invalid feature from the feature set is relatively high.

Optionally, before obtaining the validity information of the first feature set, the analysis device further obtains target data, where confidence of a prediction result output by the machine learning model for the target data is less than a confidence threshold. In a process of obtaining the validity information of the first feature set, the analysis device determines the validity information of the first feature set based on the target data.

When the machine learning model deteriorates, feature validity analysis is performed on data with a prediction result whose confidence is less than the confidence threshold. Because the data can better reflect a distribution characteristic and/or a statistic characteristic of data that causes machine learning to deteriorate, feature validity analysis does not need to be further performed on full data, thereby reducing calculation costs.

Optionally, a process in which the analysis device generates the second feature set that does not include the invalid feature includes the following:

The analysis device determines a pattern characteristic of sample data, where the pattern characteristic represents at least one of a distribution characteristic and a statistic characteristic of the sample data, and the sample data is collected after the machine learning model deteriorates; generates a third feature set, where the third feature set includes a feature corresponding to the pattern characteristic of the sample data; and deletes the invalid feature from the third feature set to obtain the second feature set.

Because the machine learning model deteriorates, it may be inferred that a pattern characteristic of data collected by a network device when the machine learning model deteriorates changes greatly compared with a pattern characteristic of historical data stored in a data storage system. Therefore, a feature in the second feature set that is generated based on the data collected by the network device after the machine learning model deteriorates is reliable.

Optionally, after generating the third feature set, the analysis device sends the third feature set to the management device, and receives an updated third feature set sent by the management device.

In this application, the analysis device sends the first feature set to the management device, so that an expert may view and/or modify a feature in the first feature set on the management device, to update the first feature set. Optionally, after obtaining all features corresponding to the pattern characteristic of the sample data and a feature parameter of each feature, the analysis device may generate a feature recommendation list, where the feature recommendation list includes all the features corresponding to the pattern characteristic of the sample data and the feature parameter of each feature. Then, the analysis device may send the feature recommendation list to the management device, so that an expert may modify the feature recommendation list on the management device. For example, the expert may delete a feature from the feature recommendation list, add a new feature to the feature recommendation list, and modify a parameter of a feature in the feature recommendation list, to update the feature recommendation list. Finally, the management device sends an updated feature recommendation list to the analysis device, and the analysis device updates the first feature set by using a feature in the updated feature recommendation list. Because an expert may view and flexibly adjust the feature in the first feature set, feature selection flexibility in this application is relatively high.

According to a second aspect, another method for implementing model training is provided.

The analysis device first determines a pattern characteristic of sample data, where the pattern characteristic represents at least one of a distribution characteristic and a statistic characteristic of the sample data. Then, the analysis device generates a target feature set, where the target feature set includes a feature corresponding to the pattern characteristic of the sample data, the feature in the target feature set is used to train a machine learning model, and the machine learning model is used to predict to-be-predicted data collected by a network device.

That the machine learning model predicts the to-be-predicted data includes: The machine learning model classifies the to-be-predicted data, and a prediction result output by the machine learning model is a classification result.

In this application, the pattern characteristic of the sample data is determined, and a feature set corresponding to the pattern characteristic of the sample data is generated. In this application, a correlation degree between each feature in a feature library and a label does not need to be calculated by using labeled sample data to generate a feature set. Therefore, there is no need to label the sample data in a feature set generation process. This reduces manual intervention in a model training process, and improves model training efficiency.

Optionally, when the feature in the target feature set is used for initial training of the machine learning model, the sample data may be obtained based on historical data collected by the network device and stored in a data storage system. When the feature in the target feature set is used to train the machine learning model that deteriorates, that is, when the analysis device first determines that the machine learning model deteriorates and then determines the pattern characteristic of the sample data, the sample data is collected after the machine learning model deteriorates.

Optionally, after generating the target feature set, the analysis device further sends the target feature set to a management device, and receives an updated target feature set sent by the management device.

Optionally, after determining that the machine learning model deteriorates, the analysis device first obtains a first feature set used for training to obtain the machine learning model that deteriorates; calculates a validity score of each feature in the first feature set, where a validity score of a feature is negatively related to correlation of the feature with another feature in the first feature set; then determines an invalid feature in the first feature set based on the validity score of each feature in the first feature set; and finally deletes the invalid feature from the target feature set to obtain a second feature set, where the second feature set is used to retrain the machine learning model that deteriorates.

According to a third aspect, an apparatus for implementing model training is provided. The apparatus includes a plurality of functional modules, and the plurality of functional modules interact to implement the method in the first aspect and the implementations of the first aspect. The plurality of functional modules may be implemented based on software, hardware, or a combination of software and hardware, and the plurality of functional modules may be randomly combined or divided based on a specific implementation.

According to a fourth aspect, another apparatus for implementing model training is provided. The apparatus includes a plurality of functional modules, and the plurality of functional modules interact to implement the method in the second aspect and the implementations of the second aspect. The plurality of functional modules may be implemented based on software, hardware, or a combination of software and hardware, and the plurality of functional modules may be randomly combined or divided based on a specific implementation.

According to a fifth aspect, still another apparatus for implementing model training is provided, including a processor and a memory.

The memory is configured to store a computer program, and the computer program includes program instructions.

The processor is configured to invoke the computer program to implement the method for implementing model training according to any one of the first aspect or the second aspect.

According to a sixth aspect, a computer storage medium is provided. The computer storage medium stores instructions, and when the instructions are executed by a processor, the method for implementing model training according to any one of the first aspect or the second aspect is implemented.

According to a seventh aspect, a chip is provided. The chip includes a programmable logic circuit and/or a program instruction, and when the chip runs, the method for implementing model training according to any one of the first aspect or the second aspect is implemented.

The technical solutions provided in this application have at least the following beneficial effects.

A pattern characteristic of sample data is determined, and a feature set corresponding to the pattern characteristic of the sample data is generated. Because the pattern characteristic of the sample data can represent the distribution characteristic and/or the statistic characteristic of the sample data, reliability of predicting to-be-predicted data by using the feature set is relatively high. In this application, a correlation degree between each feature in the feature library and a label does not need to be calculated by using labeled sample data to generate a feature set. Therefore, there is no need to label the sample data in the feature set generation process. This reduces manual intervention in the model training process, and improves model training efficiency. In addition, in this application, unsupervised feature validity determining is implemented. After the machine learning model deteriorates, the invalid feature in the feature set may be determined based on the validity score of the feature calculated based on correlation between the features, without using the labeled data to calculate a correlation degree between a feature and a label. Therefore, there is no need to label the sample data in the feature set update process. This reduces manual intervention in the feature set update process, improves feature set update efficiency, and further improves model retraining efficiency.

## BRIEF DESCRIPTION OF DRAWINGS

FIG. 1 is a schematic diagram of an application scenario of a method for implementing model training according to an embodiment of this application;
FIG. 2 is a flowchart of a method for implementing model training according to an embodiment of this application;
FIG. 3 is a schematic diagram of comparison between curves of network KPIs of different categories according to an embodiment of this application;
FIG. 4 is a schematic diagram of a curve of a network traffic KPI according to an embodiment of this application;
FIG. 5 is a schematic diagram of a sample feature data set according to an embodiment of this application;
FIG. 6 is a flowchart of a method for obtaining validity information of a first feature set according to an embodiment of this application;
FIG. 7 is a flowchart of a method for generating a second feature set according to an embodiment of this application;
FIG. 8 is a schematic structural diagram of an apparatus for implementing model training according to an embodiment of this application;
FIG. 9 is a schematic structural diagram of another apparatus for implementing model training according to an embodiment of this application;
FIG. 10 is a schematic structural diagram of still another apparatus for implementing model training according to an embodiment of this application;
FIG. 11 is a schematic structural diagram of yet another apparatus for implementing model training according to an embodiment of this application;
FIG. 12 is a schematic structural diagram of an apparatus for implementing model training according to another embodiment of this application;
FIG. 13 is a schematic structural diagram of another apparatus for implementing model training according to another embodiment of this application;
FIG. 14 is a schematic structural diagram of still another apparatus for implementing model training according to another embodiment of this application;
FIG. 15 is a schematic structural diagram of yet another apparatus for implementing model training according to another embodiment of this application; and

FIG. 16 is a block diagram of an apparatus for implementing model training according to an embodiment of this application.

**DESCRIPTION OF EMBODIMENTS**

To make the objectives, technical solutions, and advantages of this application clearer, the following further describes the implementations of this application in detail with reference to the accompanying drawings.

Feature engineering is a process in which expertise in a data domain is used to create a feature that enables a machine learning algorithm to achieve optimal performance, namely, a process in which an original attribute of data is converted into a data feature through processing. An attribute is a dimension of data, for example, an original pixel of an image. A feature is an important characteristic presented by the data and is usually obtained by performing calculation, combination, or conversion on the attribute. For example, a feature of an image is obtained after the original pixel of the image is convolved. Feature engineering mainly includes feature construction, feature extraction, and feature selection. Feature selection is closely related to the machine learning algorithm, and a selected feature directly affects performance of a machine learning model. During feature selection, a feature set highly correlated with a category is usually selected.

Feature selection generally includes four parts: a generation procedure (generation procedure), an evaluation function (evaluation function), a stopping criterion (stopping criterion), and a validation procedure (validation procedure). The generation procedure is a process of searching for a feature set and is responsible for providing a feature set for the evaluation function. The evaluation function is a criterion to evaluate quality of a feature set. The stopping criterion is related to the evaluation function and is generally a threshold. When a value output by the evaluation function reaches the threshold, searching can be stopped. The validation process is a process of verifying validity of a selected feature set by using labeled sample data in a validation data set.

Currently, feature selection is generally classified into embedded (embedded) feature selection, filter (filter) feature selection, and wrapper (wrapper) feature selection according to an evaluation standard of feature selection and a combination manner between the evaluation standard and a subsequent learning algorithm

In embedded feature selection, a feature selection algorithm itself is embedded into the learning algorithm as a component. The most typical embedded feature selection algorithm is a decision tree algorithm, including an iterative dichotomiser 3 (Iterative Dichotomiser 3, ID3) algorithm, a C4.5 algorithm (improved on the basis of the ID3 algorithm), a classification and regression tree (Classification and Regression Tree, CART) algorithm, and the like. In the decision tree algorithm, a feature has to be selected in each recursive step of a tree growth process. The data set is divided into smaller data subsets based on the selected feature. The data set corresponds to a parent node, and each data subset corresponds to a child node. A feature is usually selected based on purity of child nodes obtained after division. A higher purity of the child node obtained after division indicates a better division effect. It can be learned that a decision tree generation process is a feature selection process.

Evaluation criteria of the filter feature selection are determined based on the nature of the data set rather than the learning algorithm. Therefore, a filter feature selection algorithm is universal. In the filter feature selection, a feature or feature set highly correlated with a category is usually selected. Stronger correlation of the feature or the feature set with the category indicates higher accuracy of a classification result output by a classifier based on the feature or feature set. The evaluation criteria of the filter feature selection include distance measure, information measure, correlation measure, and consistency measure.

In the wrapper feature selection, performance of a learning algorithm is used to evaluate quality of the feature set. Generally, the classifier is trained, and the feature set is evaluated based on performance of the classifier. Learning algorithms used to evaluate the feature set include the decision tree algorithm, a neural network algorithm, a Bayesian classifier, a nearest neighbor algorithm, and a support vector machine.

Various data (for example, various time series data, log data, and device status data) collected by a network device during running can be used to train different machine learning models, to implement functions such as anomaly detection, prediction, network security protection, and application identification. The time series data includes a network key performance indicator (key performance indicator, KPI). The network KPI includes a network traffic KPI, a network device packet loss KPI, a user access KPI, and the like. The network traffic KPI is seasonal time series data. For example, in this embodiment of this application, a machine learning model used to perform anomaly detection on the network traffic KPI is used as an example to describe current model training and retraining processes.

The current model training process includes: obtaining labeled sample data; using the feature selection algorithm to calculate a correlation degree between each feature in a feature library and a label based on the labeled sample data; adding a feature highly correlated with the label to the feature set; and obtaining the machine learning model through training by using the feature set. For example, the feature set for training the machine learning model used to perform anomaly detection on the network traffic KPI may include a year-on-year feature, a period-on-period feature, an exponential moving average, and wavelet transform. An input of the machine learning model is feature data extracted from the to-be-detected network traffic KPI based on a current feature set, and an output of the machine learning model is an anomaly detection result. The anomaly detection result includes a classification result and a confidence of the to-be-detected network traffic KPI, and the classification result includes normal or abnormal. The confidence is used to reflect reliability of the classification result.

When a confidence in the anomaly detection result output by the machine learning model distinctly decreases, it indicates that the machine learning model deteriorates, and the classification result of the to-be-detected network traffic KPI output by the machine learning model is unreliable. In this case, an expert needs to manually label to-be-detected network traffic KPIs whose classification results are unreliable, and label normal network traffic KPIs and abnormal network traffic KPIs. Then, an appropriate feature selection algorithm (for example, a Bayesian classifier) is used to calculate a correlation degree between each feature in the current feature set and a label based on the labeled network traffic KPI. A correlation degree between a feature and a label is positively related to a difference between the feature in a normal network traffic KPI and the feature in an abnormal network traffic KPI. The correlation degree between a feature and a label may be represented by a value from 0 to 1. Correlation degrees between features in the current feature set and labels are sorted in descending order. A feature with relatively weak correlation with a label may be considered as an invalid feature. For example, a correlation degree between the year-on-year feature and a label is 0.95, a correlation degree between the period-on-period feature and the label is 0.92, a correlation degree between the exponential moving average and the label is 0.9, and a correlation degree between the wavelet transform and the label is 0.53. Because the correlation between the wavelet transform and the label is weaker, the wavelet transform may be considered as an invalid feature. After an expert determines the invalid feature, the invalid feature is removed from the current feature set, and an appropriate new feature is selected from the feature library and added to the feature set based on expert experience, to obtain a new feature set. For example, if the invalid feature is the wavelet transform, and new features selected based on expert experience include kurtosis and skewness, the new feature set includes a year-on-year feature, a period-on-period feature, an exponential moving average, kurtosis, and skewness. Finally, the new feature set is used to retrain and evaluate the machine learning model until a model evaluation result meets an expected requirement, to update the machine learning model. That the model evaluation result meets the expected requirement may be that the confidence in the anomaly detection result output by the machine learning model reaches a threshold.

In machine learning model training and retraining processes, a feature set needs to be used to train the machine learning model, and in a process of generating the feature set, a large amount of labeled data needs to be used to calculate a correlation degree between a feature and a label to determine feature validity. Therefore, labeling needs to be performed on a large amount of data. This consumes a long time and causes relatively low model training efficiency.

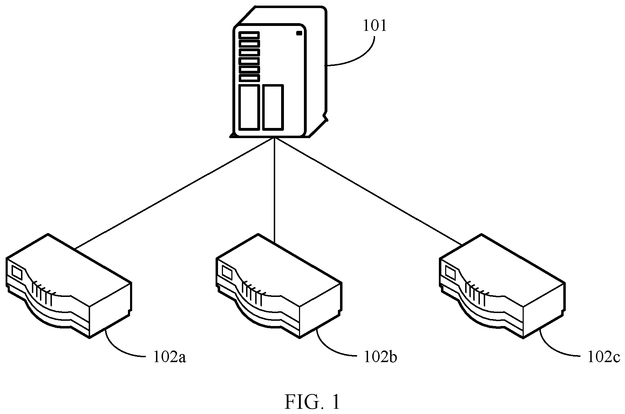

FIG. 1 is a schematic diagram of an application scenario of a method for implementing model training according to an embodiment of this application. As shown in FIG. 1, the application scenario includes an analysis device 101 and network devices 102a to 102c (collectively referred to as network devices 102). A quantity of analysis devices and a quantity of network devices in FIG. 1 are merely used as an example, and are not intended to limit an application scenario of the method for implementing model training provided in this embodiment of this application. The application scenario may be a second generation (2-Generation, 2G) communications network, a third generation (3rd Generation, 3G) communications network, a long term evolution (Long Term Evolution, LTE) communications network, or the like.

The analysis device 101 may be one server, a server cluster including several servers, or a cloud computing service center. The network device 102 includes a router, a switch, a base station, a network cable, or the like. The analysis device 101 is connected to the network device 102 through a wired network or a wireless network.

The network device 102 is configured to upload collected data to the analysis device 101, where the data includes various types of time series data, log data, device status data, and the like. The analysis device 101 is configured to train one or more machine learning models. Different machine learning models may separately implement functions such as anomaly detection, prediction, network security protection, and application identification by using the data uploaded by the network device 102.

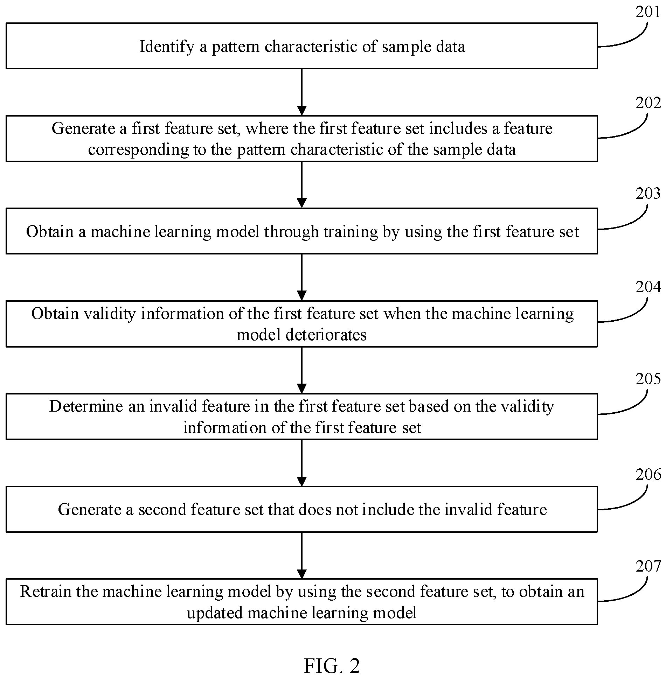

FIG. 2 is a flowchart of a method for implementing model training according to an embodiment of this application. The method may be applied to the analysis device 101 in the application scenario shown in FIG. 1. As shown in FIG. 2, the method includes the following steps.

Step 201: Determine a pattern characteristic of sample data.

The pattern characteristic of the sample data represents at least one of a distribution characteristic and a statistic characteristic of the sample data, and the pattern characteristic of the sample data may be represented by using a feature profile of the sample data. After obtaining data collected by a network device, the analysis device may preprocess the data to obtain sample data, and perform pattern recognition on the sample data to determine a pattern characteristic of the sample data. The preprocessing data includes: removing redundant fields from the data and filling a vacant value in the data. In this embodiment of this application, the sample data includes data obtained after a group of data collected by the network device is preprocessed. For example, in the following embodiments of this application, an example in which the data collected by the network device is a network KPI is used for description.

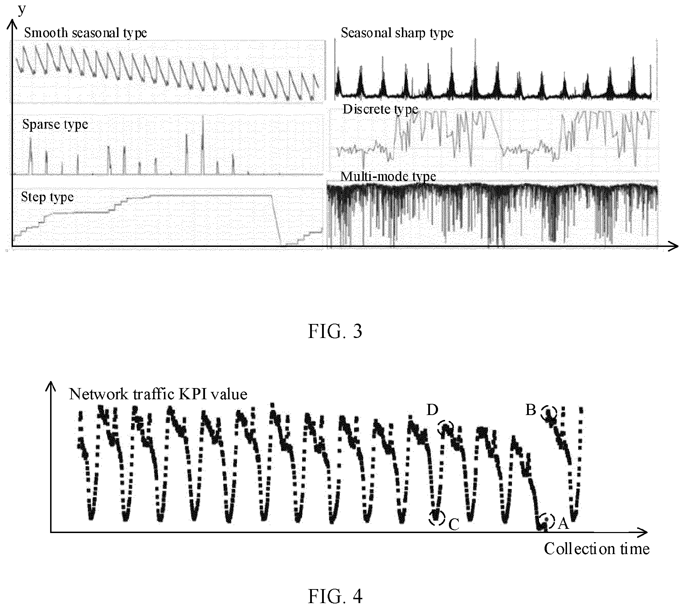

For example, a distribution characteristic of the network KPI is used to determine a category of the network KPI. A statistic characteristic of the network KPI includes statistical values (including a maximum value, a minimum value, a mean, a variance, and the like) and feature values (for example, a seasonality value and a noise value) of the network KPI, and the like. Optionally, the category of the network KPI includes seasonal (seasonal) (including smooth seasonal and seasonal sharp), sparse (discrete), discrete (irregular), step (step), multi-mode (multi-mode), and the like. After the network KPI is preprocessed, network KPI values and collection time can be obtained. FIG. 3 is a schematic diagram of comparison between curves of network KPIs of different categories according to this embodiment of this application, where an x direction indicates collection time, and a y direction indicates a network KPI value. As shown in FIG. 3, a curve waveform of a smooth seasonal network KPI is relatively smooth and shows clear seasonality. A curve waveform of a seasonal sharp network KPI has small interference and many fluctuations (burrs), and shows clear seasonality. A curve waveform of a sparse network KPI is roughly stable, but abrupt changes may occur randomly. A curve waveform of a discrete network KPI is irregular. A curve waveform of a step-type network KPI rises or falls in a step-like manner. A curve waveform of a multi-mode network KPI presents in various forms, and is a combined mode that may include seasonality, a burr, and an abrupt change. The network KPI curve features seasonality, discreteness, trend, step, randomness, and noise. Pattern recognition performed on the network KPI refers to determining a pattern characteristic of the network KPI based on a curve feature of the network KPI. The pattern characteristic of the network KPI may be represented by the category of the network KPI and a typical feature value of a curve of the network KPI. For example, the pattern characteristic of the network traffic KPI may be "smooth seasonal, seasonality = 266, trend = 10.9, and noise = 3.1".

Optionally, when initial training is performed on a machine learning model, historical data previously collected by the network device may be obtained from a data storage system, and the historical data is preprocessed to obtain sample data. The data storage system may store various types of historical data reported by the network device, and the analysis device obtains corresponding historical data from the data storage system based on a function of the trained machine learning model.

Step 202: Generate a first feature set, where the first feature set includes a feature corresponding to the pattern characteristic of the sample data.

A feature in the first feature set is used to train a machine learning model, and the machine learning model is used to predict to-be-predicted data collected by the network device. The first feature set may include all features used to train the machine learning model. That the machine learning model predicts the to-be-predicted data includes: The machine learning model classifies the to-be-predicted data, and a prediction result output by the machine learning model is a classification result. For example, if the to-be-predicted data is a network traffic KPI, that the machine learning model predicts the network traffic KPI includes: The machine learning model performs anomaly detection on the network traffic KPI, and a prediction result output by the machine learning model includes two types, namely, normal and abnormal.

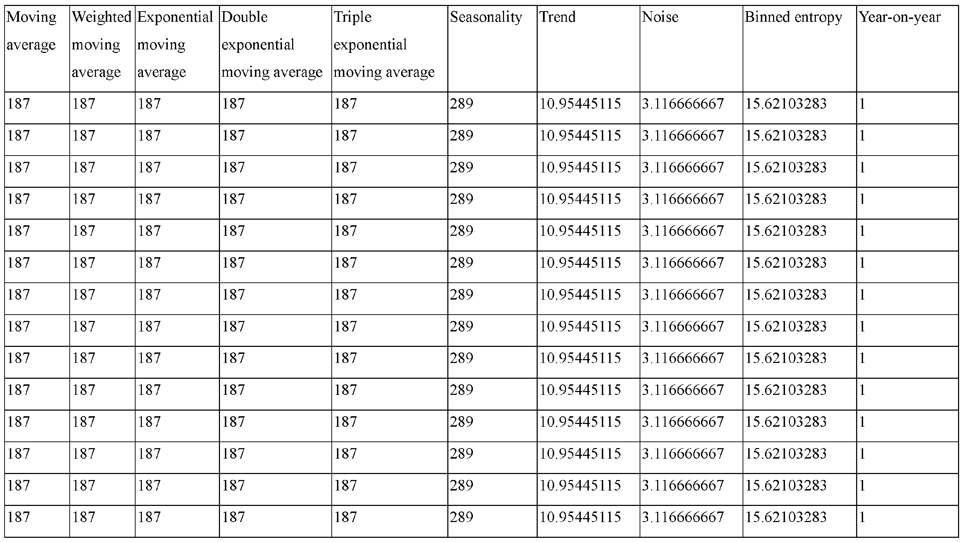

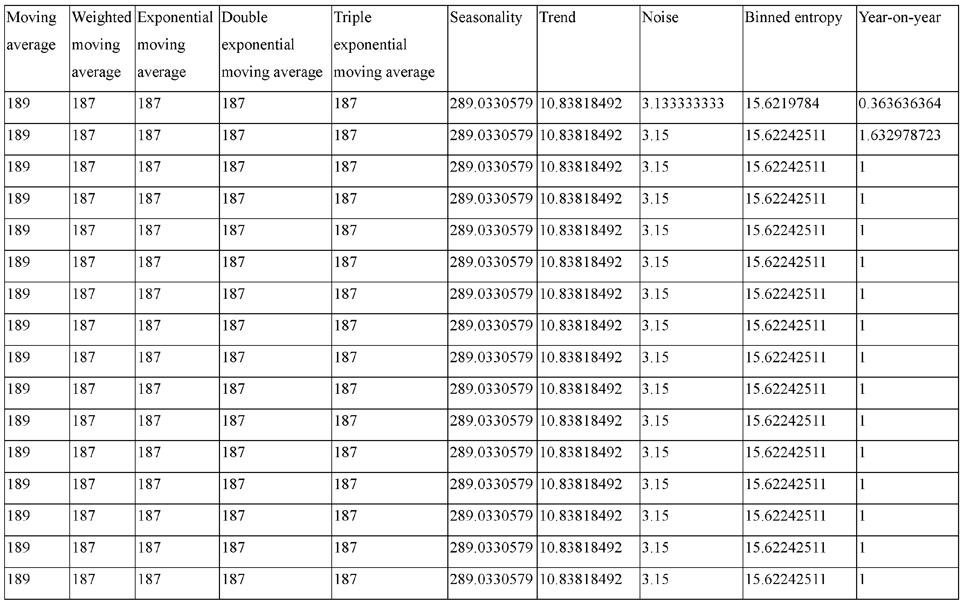

Optionally, the analysis device obtains all features corresponding to the pattern characteristic of the sample data and a feature parameter of each feature, and uses a set including all the features corresponding to the pattern characteristic of the sample data as the first feature set. In this embodiment of this application, the analysis device may prestore all the features corresponding to a plurality of pattern characteristics and the feature parameter of each feature, where the feature parameter is used to calculate a value of a corresponding feature. For example, parameters of a feature "simple moving average" include a window size, a parameter indicating whether data is seasonal, a seasonality length, and the like. The feature corresponding to the pattern characteristic and the feature parameter of the feature that are prestored in the analysis device may be determined based on expert experience. For example, when the first feature set is used to train a machine learning model that is to perform anomaly detection, a feature corresponding to each pattern characteristic may be selected according to a basic principle of feature selection for anomaly detection. The basic principle is to select a feature whose value is prone to drastically change in an anomaly event. For example, FIG. 4 is a schematic diagram of a curve of a network traffic KPI according to this embodiment of this application, where a horizontal coordinate represents collection time, and a vertical coordinate represents a network traffic KPI value. As shown in FIG. 4, there is an anomaly point A, an anomaly point B, a normal point C, and a normal point D on the network traffic KPI curve. By comparing feature values of features at the anomaly point A, the anomaly point B, the normal point C, and the normal point D, a feature whose feature value differs greatly at an abnormal point and a normal point is selected to generate a feature set.

Optionally, after generating the first feature set, the analysis device sends the first feature set to a management device, so that an expert may view and/or modify the feature in the first feature set on the management device, to update the first feature set. The analysis device receives an updated first feature set sent by the management device. In this embodiment of this application, after obtaining all the features corresponding to the pattern characteristic of the sample data and the feature parameter of each feature, the analysis device may generate a feature recommendation list, where the feature recommendation list includes all the features corresponding to the pattern characteristic of the sample data and the feature parameter of each feature. Then, the analysis device may send the feature recommendation list to the management device, so that an expert may modify the feature recommendation list on the management device. For example, the expert may delete a feature from the feature recommendation list, add a new feature to the feature recommendation list, and modify a parameter of a feature in the feature recommendation list, to update the feature recommendation list. Finally, the management device sends an updated feature recommendation list to the analysis device, and the analysis device updates the first feature set by using a feature in the updated feature recommendation list. The management device may be an operations support system (operations support system, OSS) or another network device connected to the analysis device. Optionally, when the analysis device that generates the first feature set has a display function, the analysis device may directly display the first feature set or the feature recommendation list on a display interface of the analysis device to an expert for viewing and/or modification.

In this embodiment of this application, because an expert may view and flexibly adjust the feature in the first feature set, feature selection flexibility in this embodiment of this application is relatively high.

For example, Table 1 is a feature recommendation list corresponding to the network traffic KPI provided in this embodiment of this application. Referring to Table 1, features selected for a smooth seasonal network KPI such as the network traffic KPI include a simple moving average, a weighted moving average, exponential moving averages (including an exponential moving average, a double exponential moving average, and a triple exponential moving average), a seasonality component (seasonality for short) of time series decomposition, a trend component (trend for short) of time series decomposition, a noise component (noise for short) of time series decomposition, a binned entropy, and a year-on-year feature.

**Table 1**

| Feature identifier | Parameter 1 | Parameter 2 | Parameter 3 |
|---|---|---|---|
| Simple moving average (moving_average) | Window size | is_seasonal: an int type, indicating whether data is seasonal, where 0 indicates that data is not seasonal and 1 indicates that data is seasonal | season freq: an int type, indicating a seasonality length |
| Weighted moving average (weighted_mv) | Window size | weight: a list type, indicating a weight value of each point, where a list length is the window size | is_seasonal: an int type, indicating whether data is seasonal, where 0 indicates that data is not seasonal and 1 indicates that data is seasonal |
| Exponential moving average (exponential_mv) | Window size | alpha: a float type | is_seasonal: an int type, indicating whether data is seasonal, where 0 indicates that data is not seasonal and 1 indicates that data is seasonal |
| Double exponential moving average (double_mv) | Window size | alpha: a float type | beta: a float type |
| Triple exponential moving average (triple_mv) | Window size | alpha: a float type | beta: a float type |
| Seasonality (tsd_seasonal) | Window size | season freq: an int type, indicating a seasonality length | |
| Trend (tsd_trend) | Window size | season freq: an int type, indicating a seasonality length | |
| Noise (tsd_mean) | Window size | season freq: an int type, indicating a seasonality length | |
| Binned entropy (binned entropy) | Window size | max bins: an int type, indicating a quantity of bins | |
| Year-on-year (yoy) | Window size | data_period: an int type, indicating a length of each period | period_num: an int type, indicating a quantity of periods |

The feature identifier in Table 1 may be represented by using a Chinese name, an English name, and/or a specific symbol of the feature. Parameters of each feature can be dynamically extended based on a quantity of parameters. The window size indicates a quantity of network traffic KPIs included in a window from which the feature is extracted. Parameter 2 and parameter 3 in Table 1 are described in a form of "parameter name: parameter type, parameter description". For example, in "is_seasonal: an int type, indicating whether data is seasonal, where 0 indicates that data is not seasonal and 1 indicates that data is seasonal", "is_seasonal" is a parameter name, "int type" is a parameter type, "indicating whether data is seasonal, where 0 indicates that data is not seasonal and 1 indicates that data is seasonal" is parameter description. For another example, in "alpha: a float type", "alpha" is a parameter name, and "a float type" is a parameter type. For example, if parameters 1, 2, and 3 of the feature "simple moving average" in Table 1 are 266, 1, and 266 respectively, it indicates that a window size of the simple moving average is 266, data is seasonal, and a seasonality length is 266. A value of the simple moving average can be calculated by using these parameters. Optionally, the feature recommendation list may further include a quantity of parameters of each feature. A form and content of the feature recommendation list are not limited in this embodiment of this application.

In this embodiment of this application, the pattern characteristic of the sample data is determined, and the first feature set corresponding to the pattern characteristic of the sample data is generated. Because the pattern characteristic of the sample data can represent a distribution characteristic and/or a statistic characteristic of the sample data, an expert can select, based on the pattern characteristic of the sample data, a feature whose feature value differs greatly in different events (for example, a normal event and an anomaly event) to generate the first feature set, so that a feature in the first feature set is strongly correlated with a category. Therefore, reliability of predicting data by using the feature in the first feature set is relatively high. In this embodiment of this application, a correlation degree between each feature in a feature library and a label does not need to be calculated by using labeled sample data to generate a feature set. Therefore, there is no need to label the sample data. This reduces manual intervention in a model training process, and further improves model training efficiency.

Step 203: Obtain a machine learning model through training by using the first feature set.

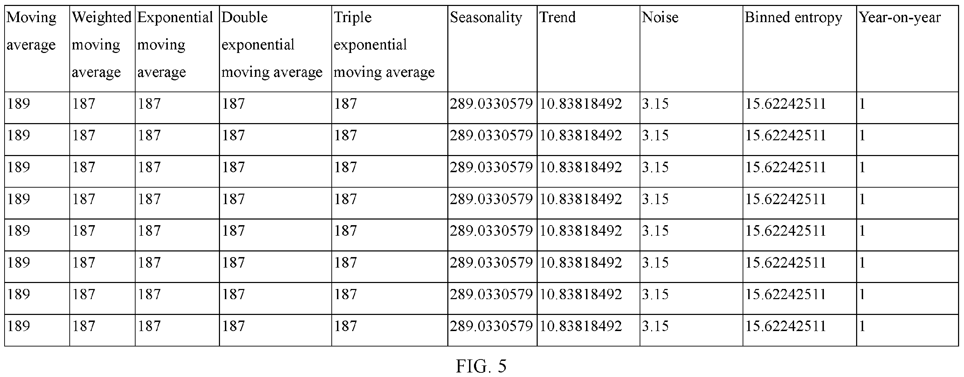

Optionally, the sample data is obtained from the data storage system, and feature data of each feature in the first feature set is automatically extracted from the sample data by using an extraction algorithm, to obtain a sample feature data set. The machine learning model is obtained through training by using the sample feature data set. For example, the sample feature data set is input into a model trainer, and the model trainer outputs the machine learning model. For example, the sample data is the network traffic KPI, and the machine learning model is used to perform anomaly detection on the network traffic KPI. Assuming that the first feature set includes all the features in Table 1, the generated sample feature data set may be shown in FIG. 5. Each row of data represents feature data extracted from a group of network traffic KPIs, that is, one piece of sample feature data. In a process of using the machine learning model, inputs include the feature data of each feature that is in the first feature set and that is extracted from the to-be-detected network traffic KPI, and outputs include a classification result of the to-be-detected network traffic KPI and a confidence of the classification result. For example, the machine learning model outputs the classification result as abnormal and the confidence as 0.95, indicating that there is a 95% probability that the to-be-detected network traffic KPI is abnormal.

In an optional embodiment of this application, the machine learning model is trained by using unlabeled sample data, and performance of the machine learning model is evaluated based on a confidence of the prediction result output by the machine learning model. A higher confidence of the prediction result output by the machine learning model indicates better model performance.

In another optional embodiment of this application, the machine learning model is trained by using a large amount of labeled sample data, and performance of the machine learning model is evaluated based on accuracy of the prediction result output by the machine learning model.

Step 204: Obtain validity information of the first feature set when the machine learning model deteriorates.

The validity information includes a validity score of each feature in the first feature set, and the validity score of the feature is negatively related to correlation of the feature with another feature in the first feature set. In other words, weaker correlation of the feature with another feature in the first feature set indicates a higher validity score of the feature.

A goal of feature validity determining is to find a feature set that includes most or all information in a target feature set. Therefore, an information contribution degree of a feature is usually used to determine feature validity. The information contribution degree of a feature reflects an amount of information included in the feature. A larger amount of information included in the feature indicates a higher information contribution degree of the feature to the feature set. The information contribution degree of a feature to the feature set is positively related to correlation of the feature with a category. Weak correlation between features can be understood as that the features are relatively independent and have little impact on each other. Different features with weak correlation have different effects on category prediction and cannot be replaced by other features. Strong correlation between features indicates that the features affect each other, and a change of one feature will cause another feature to change. Consequently, correlation of a single feature with a category is not strong. In other words, features with weak correlation generally have relatively strong correlation with categories. Further, it may be obtained that features with weak correlation contribute more information to the feature set. In other words, information contribution degrees of the features to the feature set are negatively related to correlation between the features. Therefore, the correlation between the features can be used as the basis for determining feature validity.

Optionally, when a cumulative quantity of prediction results whose confidence is less than a confidence threshold and that are output by the machine learning model within a target time period reaches a first quantity, or a quantity of prediction results whose confidence is less than a confidence threshold and that are continuously output by the machine learning model reaches a second quantity, it is determined that the machine learning model deteriorates.

In this embodiment of this application, the validity information of the first feature set may be obtained based on target data. In other words, after the machine learning model deteriorates, the analysis device may obtain the target data, and determine the validity information of the first feature set based on the target data. Confidence of a prediction result output by the machine learning model for the target data is less than the confidence threshold. When the machine learning model deteriorates, feature validity analysis is performed on data with a prediction result whose confidence is less than the confidence threshold. Because the data can better reflect a distribution characteristic and/or a statistic characteristic of data that causes machine learning to deteriorate, feature validity analysis does not need to be further performed on full data, thereby reducing calculation costs. The confidence threshold may be 0.6.

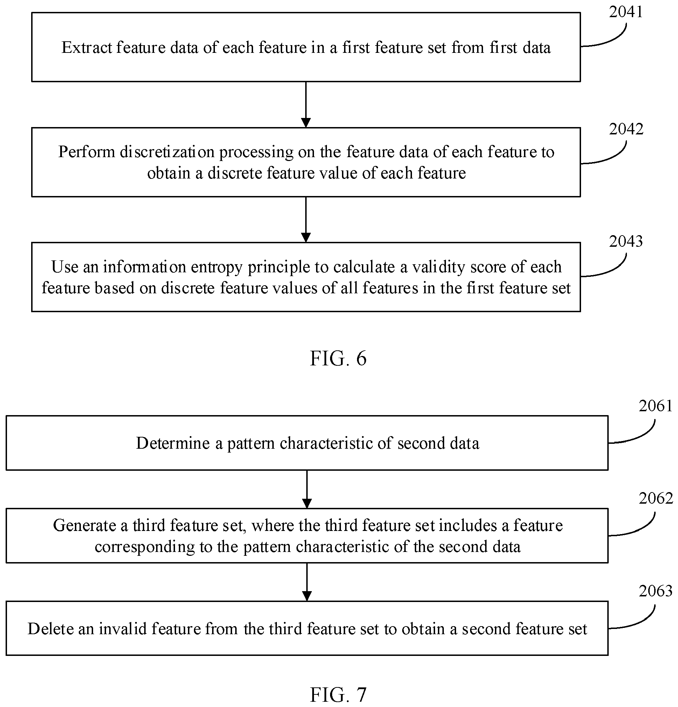

Optionally, the validity score of the feature in the first feature set may be obtained based on mutual information of the feature relative to all other features in the first feature set. FIG. 6 is a flowchart of a method for obtaining the validity information of the first feature set according to this embodiment of this application. As shown in FIG. 6, the following implementation process is included.

Step 2041: Extract the feature data of each feature in the first feature set from first data.

Optionally, the first data includes data with a prediction result, output by the machine learning model, whose confidence is less than the confidence threshold.

For example, the first data includes the network traffic KPI, the first feature set includes all the features in Table 1, and the feature data extracted from the first data may be shown in FIG. 5.

Step 2042: Perform discretization processing on the feature data of each feature to obtain a discrete feature value of each feature.

Optionally, discretization processing is performed on the feature data by using an unsupervised discretization algorithm. For example, the unsupervised discretization algorithm includes an equal-width interval method, an equal-frequency interval method, a string analysis algorithm, a clustering algorithm, or the like. Discretization processing performed on data is to convert continuous data into discrete data. For example, it is assumed that a noise value continuously changes between 3.10 and 3.30. For example, noise values include 3.11, 3.112, 3.114, 3.121, 3.231, and the like. In this case, discretization processing is performed on the noise values by using the equal-width interval method. A value between 3.10 and 3.12 may be considered as 1, a value between 3.12 and 3.14 may be considered as 2, a value between 3.14 and 3.16 may be considered as 3, and so on. After discretization processing is performed on the noise values, a plurality of discrete feature values (1, 2, 3, and the like) may be obtained.

Step 2043: Use an information entropy principle to calculate validity scores of the features based on discrete feature values of all the features in the first feature set.

Optionally, an implementation process of step 2043 includes the following S1 to S4:

In S1, an information entropy of a first feature is calculated based on a discrete feature value of the first feature, where the first feature is any feature in the first feature set.

The information entropy of the first feature is used to describe uncertainty of a value of the first feature. An information entropy $H(t)$ of a first feature $t$ is calculated by using the following information entropy formula:

$$H(t) = -\sum_{m=1}^{M} p(t_m) log p(t_m)$$,

where $M$ represents a quantity of possible discrete feature values of the first feature $t$; $t_m$ represents an $m$th discrete feature value of the first feature $t$; $p(t_m)$ represents a probability that a discrete feature value of the first feature $t$ is equal to $t_m$; and both $m$ and $M$ are positive integers.

In S2, a conditional entropy of the first feature relative to a second feature is calculated based on the discrete feature value of the first feature and a discrete feature value of the second feature, where the second feature is any feature in the first feature set other than the first feature.

The conditional entropy of the first feature relative to the second feature is used to describe uncertainty of the value of the first feature given that a value of the second feature is known. A conditional entropy $H(t|q)$ of the first feature $t$ relative to a second feature $q$ is calculated by using the following conditional entropy formula:

$$H(t|q) = -\sum_{n=1}^{N} \left( p(q_n) \sum_{m=1}^{M} p(t_m|q_n) log p(t_m|q_n) \right),$$

where $N$ represents a quantity of possible discrete feature values of the second feature $q$; $q_n$ represents an $n$th discrete feature value of the second feature $q$; $p(q_n)$ represents a probability that a discrete feature value of the second feature q is equal to $q_n$; $p(t_m|q_n)$ represents a probability that the discrete feature value of the first feature $t$ is equal to $t_m$ when the discrete feature value of the second feature q is equal to $q_n$; and both $n$ and $N$ are positive integers.

In S3, mutual information of the first feature relative to the second feature is calculated based on the information entropy of the first feature and the conditional entropy of the first feature relative to the second feature.

The mutual information of the first feature relative to the second feature is used to describe a reduction degree of uncertainty of the value of the first feature given that the value of the second feature is known. The mutual information of the first feature relative to the second feature can reflect correlation between the first feature and the second feature, and lower correlation between the first feature and the second feature indicates a larger value of the mutual information of the first feature relative to the second feature. The mutual information of the first feature relative to the second feature is equal to mutual information of the second feature relative to the first feature. Mutual information $I(t;q)$ of the first feature $t$ relative to the second feature $q$ is calculated by using the following mutual information formula:

$$I(t;q) = H(t) - H(t|q).$$

In S4, a validity score of the first feature is calculated based on mutual information between the first feature and all other features than the first feature in the first feature set.

Optionally, a validity score $S(t)$ of the first feature $t$ is calculated by using the following validity score formula:

$$S(t) = \frac{1}{L}\sum_{i=1}^{L} I(t;q_i),$$

where $L$ represents a quantity of all the other features than the first feature in the first feature set; $qi$ represents an $i$th feature in all the other features; $I(t;qi)$ represents mutual information of the first feature relative to the $i$th feature; and both $i$ and $L$ are positive integers.

In the foregoing validity score formula, a mean of mutual information of a feature relative to all other features is used as a validity score of the feature, and a larger value of mutual information of the feature relative to all the other features indicates weaker correlation of the feature with another feature. In other words, the feature includes more information about the another feature. For example, the year-on-year feature includes most information of the binned entropy feature, and a value of mutual information of the year-on-year feature relative to the binned entropy feature is relatively large, indicating that the year-on-year feature is more valid than the binned entropy feature. Even if the binned entropy feature is removed, the year-on-year feature retains most information of the binned entropy feature, which has little impact on a category prediction result of the to-be-predicted data. Therefore, for the validity score obtained through calculation by using the foregoing validity score formula, a feature with a high validity score can minimize uncertainty of a feature with a low validity score (that is, maximally cover information of the feature with a low validity score). In other words, when the feature set includes a feature with a high validity score, information carried by a feature with a low validity score has an extremely low information contribution degree to the feature set.

In this embodiment of this application, unsupervised feature validity determining is implemented. After the machine learning model deteriorates, an invalid feature in the feature set may be determined based on the validity score of the feature calculated based on correlation between the features, without using labeled data to calculate a correlation degree between a feature and a label. Therefore, there is no need to label the sample data. This reduces manual intervention in a process of determining the invalid feature, improves feature set update efficiency, and further improves model retraining efficiency.

Step 205: Determine an invalid feature in the first feature set based on the validity information of the first feature set.

In an optional embodiment of this application, the invalid feature includes a feature whose validity score is less than a score threshold in the first feature set. The score threshold may be calculated based on one or more of a mean of validity scores of all the features in the first feature set, a variance of validity scores of all the features in the first feature set, and a standard deviation of validity scores of all the features in the first feature set. After the validity information of the first feature set is obtained, the score threshold may be calculated based on the validity scores of all the features in the first feature set. For example, a score threshold T$h$ meets: T$h$ = z1*$ES$ + z2*$DS$. $ES$ is the mean of validity scores of all the features in the first feature set, $DS$ is the standard deviation of validity scores of all the features in the first feature set, and both z1 and z2 are coefficients. Values of z1 and z2 may be specified based on expert experience. For example, a value of z1 is 1, and a value range of z2 is 0.5 to 3. This is not limited in this embodiment of this application.

Because the score threshold is calculated based on the validity scores of all the features in the first feature set, score thresholds calculated for different feature sets or for a same feature set at different moments may be different, and can vary with the validity scores of the features in the feature set. Therefore, compared with a specified score threshold, the score threshold provided in this application can facilitate more accurate classification of the invalid feature and the valid feature.

In still another optional embodiment of this application, the invalid feature includes several features with lowest validity scores in the first feature set. For example, the bottom 20% of features with lowest validity scores in the first feature set may be used as invalid features. After the validity information of the first feature set is obtained, all the features in the first feature set may be sorted in descending order of validity scores, and invalid feature flags are set for several features with lowest validity scores.

Optionally, after obtaining the validity information of the first feature set, the analysis device may generate a validity score list of the first feature set based on the validity information, and send the validity score list to the management device, so that an expert can view and/or modify the validity score list. For example, the expert can modify a validity flag in the validity score list. The validity score list includes the feature identifier and the validity indication information of each feature in the first feature set. The validity indication information includes at least one of the validity score and the validity flag. In other words, the validity indication information includes the validity score, the validity indication information includes the validity flag, or the validity indication information includes both the validity score and the validity flag. The validity flag includes a valid feature flag or an invalid feature flag. The management device may be an OSS or another network device connected to the analysis device. Optionally, when the analysis device that generates the validity score list has a display function, the analysis device may directly display the validity score list on a display interface of the analysis device to an expert for viewing and/or modification.

Optionally, the validity indication information includes the validity score and the validity flag. The analysis device may further receive an updated validity score list sent by the management device, and determines a feature that is in the updated validity score list and whose validity flag is an invalid feature flag as the invalid feature in the first feature set.

In this embodiment of this application, an expert may view the validity score list, and modify the validity flag in the validity score list, for example, modify a valid feature flag of a feature to an invalid feature flag, or modify an invalid feature flag of a feature to a valid feature flag. This is to adjust the valid feature and the invalid feature in the validity score list. The analysis device obtains the invalid feature from a finally confirmed validity score list. Therefore, in this embodiment of this application, flexibility of obtaining the invalid feature from the feature set is relatively high.

For example, the first feature set includes all the features in Table 1, and the validity score list of the first feature set may be shown in Table 2.

**Table 2**

| Feature identifier | Validity score | Validity flag |
|---|---|---|
| Simple moving average | 3.056 | Valid |
| Weighted moving average | 3.059 | Valid |
| Exponential moving average | 3.191 | Valid |
| Double exponential moving average | 3.294 | Valid |
| Triple exponential moving average | 3.512 | Valid |
| Seasonality | 3.071 | Valid |
| Trend | 1.701 | Invalid |
| Noise | 1.524 | Invalid |
| Binned entropy | 0.794 | Invalid |
| Year-on-year | 3.283 | Valid |

Referring to Table 2, the validity score list may include a feature identifier of each feature in the first feature set, a validity score of each feature, and a validity flag of each feature. The feature identifier may be represented by using a Chinese name, an English name, and/or a specific symbol of the feature. The validity flag includes a valid feature flag and an invalid feature flag. Referring to Table 2, the valid feature flag is "valid", and the invalid feature flag is "invalid". Alternatively, the valid feature flag may be "0", and the invalid feature flag may be "1". The validity flag may alternatively be represented by another symbol. This is not limited in this embodiment of this application.

Step 206: Generate a second feature set that does not include the invalid feature.

Optionally, as shown in FIG. 7, an implementation process of step 206 includes the following steps:

Step 2061: Determine a pattern characteristic of second data.

The pattern characteristic of the second data represents at least one of a distribution characteristic and a statistic characteristic of the second data. The second data is collected after the machine learning model deteriorates. For example, the second data may be currently collected by the network device. Because the machine learning model deteriorates, it may be inferred that a pattern characteristic of data collected by the network device when the machine learning model deteriorates changes greatly compared with a pattern characteristic of historical data stored in the data storage system. Therefore, a feature in the second feature set that is generated based on the data collected by the network device after the machine learning model deteriorates is reliable. For an implementation of step 2061, refer to the related descriptions in step 201. Details are not described herein again in this embodiment of this application.

Step 2062: Generate a third feature set, where the third feature set includes a feature corresponding to the pattern characteristic of the second data.

Optionally, after generating the third feature set, the analysis device sends the third feature set to the management device, and receives an updated third feature set sent by the management device. For an implementation of step 2062, refer to the related descriptions in step 202. Details are not described herein again in this embodiment of this application.

Step 2063: Delete an invalid feature from the third feature set to obtain the second feature set.

Optionally, the second feature set is generated based on the third feature set generated in step 2062 and the validity score list generated in step 205. In other words, all features in the updated third feature set, other than a feature for which the invalid feature flag is set in the validity score list, are used as features in the second feature set.

Optionally, if the analysis device has determined the invalid feature in the first feature set before generating the feature recommendation list, the feature recommendation list generated by the analysis device in step 2062 may be a feature recommendation list from which the invalid feature is removed, and the second feature set may be obtained based on the feature recommendation list.

Step 207: Retrain the machine learning model by using the second feature set, to obtain an updated machine learning model. For a process of retraining the machine learning model by using the second feature set, refer to the process of training the machine learning model by using the first feature set in step 203. Details are not described herein again in this embodiment of this application.

Optionally, in this embodiment of this application, the analysis device includes the data storage system, an analyzer, and a controller. The data storage system is configured to store data uploaded by the network device. The analyzer is configured to perform the foregoing steps 201 to 206, including: feature selection, model training, model evaluation, feature updating, and model retraining. When a feature is updated, the analyzer sends a model feature update notification message to the controller. The controller is configured to: after receiving the model feature update notification message sent by the analyzer, determine whether to start model retraining; and after determining that model retraining needs to be performed, send a model retraining instruction to the analyzer, to instruct the analyzer to start model retraining. The analysis device includes one or more devices. Optionally, the data storage system, the analyzer, and the controller may be deployed on a single device, or may be separately deployed on different devices. The analyzer may also include one or more devices. When the analyzer includes one device, the foregoing steps 201 to 207 are performed by the device. When the analyzer includes a first device and a second device, steps 201 to 203 and 207 are performed by the first device, and steps 204 to 206 are performed by the second device. To be specific, after the machine learning model deteriorates, the second device updates the feature set and transmits an updated feature set to the first device, and the first device retrains the machine learning model by using the updated feature set.

Optionally, functions of the second device may be implemented by a third device and a fourth device. In this embodiment of this application, step 204 may be performed by the third device, and steps 205 and 206 may be performed by the fourth device. After obtaining the validity information of the first feature set, the third device sends the validity information to the fourth device, and the fourth device determines the invalid feature in the first feature set based on the validity information, and generates the second feature set that does not include the invalid feature. Alternatively, after obtaining the validity information of the first feature set, the third device generates the validity score list, and sends the validity score list to the management device. The management device sends the validity score list (which may be an updated validity score list) to the fourth device, and the fourth device determines the invalid feature in the first feature set based on the validity score list, and generates the second feature set that does not include the invalid feature.

A sequence of steps in the method for implementing model training provided in this embodiment of this application may be properly adjusted, or steps may be correspondingly added or deleted based on a situation. Any variation readily figured out by a person skilled in the art within the technical scope disclosed in this application shall fall within the protection scope of this application, and details are not described herein.

In the method for implementing model training provided in this embodiment of this application, a pattern characteristic of the sample data is determined, and a feature set corresponding to the pattern characteristic of the sample data is generated. Because the pattern characteristic of the sample data can represent the distribution characteristic and/or the statistic characteristic of the sample data, reliability of predicting to-be-predicted data by using the feature set is relatively high. In this embodiment of this application, a correlation degree between each feature in the feature library and a label does not need to be calculated by using labeled sample data to generate a feature set. Therefore, there is no need to label the sample data in the feature set generation process. This reduces manual intervention in the model training process, and improves model training efficiency. In addition, in this embodiment of this application, unsupervised feature validity determining is implemented. After the machine learning model deteriorates, the invalid feature in the feature set may be determined based on the validity score of the feature calculated based on correlation between the features, without using the labeled data to calculate a correlation degree between a feature and a label. Therefore, there is no need to label the sample data in the feature set update process. This reduces manual intervention in the feature set update process, improves feature set update efficiency, and further improves model retraining efficiency.

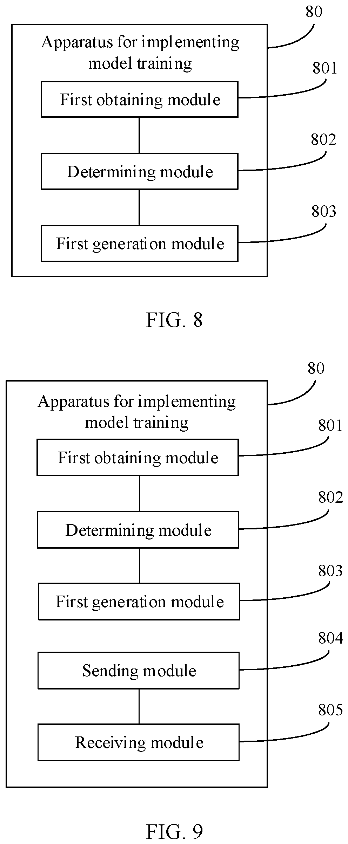

FIG. 8 is a schematic structural diagram of an apparatus for implementing model training according to an embodiment of this application. The apparatus may be used in the analysis device 101 in the application scenario shown in FIG. 1. As shown in FIG. 8, the apparatus 80 includes:

a first obtaining module 801, configured to obtain validity information of a first feature set when a machine learning model deteriorates, where the first feature set includes a plurality of features used for training to obtain the machine learning model, the validity information includes a validity score of each feature in the first feature set, and a validity score of a feature is negatively related to correlation of the feature with another feature in the first feature set;

a determining module 802, configured to determine an invalid feature in the first feature set based on the validity information; and

a first generation module 803, configured to generate a second feature set that does not include the invalid feature, where the second feature set is used to retrain the machine learning model.

In this embodiment of this application, unsupervised feature validity determining is implemented. After the machine learning model deteriorates, the invalid feature in the feature set may be determined based on the validity score of the feature calculated based on correlation between the features, without using labeled data to calculate a correlation degree between a feature and a label. Therefore, there is no need to label sample data in a feature set update process. This reduces manual intervention in the feature set update process, improves feature set update efficiency, and further improves model retraining efficiency.

Optionally, the validity score of the feature is obtained based on mutual information of the feature relative to all other features in the first feature set.

Optionally, the invalid feature includes a feature whose validity score is less than a score threshold in the first feature set.

Optionally, the score threshold is calculated based on one or more of a mean of validity scores of all features in the first feature set, a variance of validity scores of all features in the first feature set, and a standard deviation of validity scores of all features in the first feature set.

Optionally, as shown in FIG. 9, the apparatus for implementing model training provided in this embodiment of this application may further include a sending module 804 and a receiving module 805. The analysis device sends data to a management device via the sending module 804, and receives, via the receiving module 805, data sent by the management device.

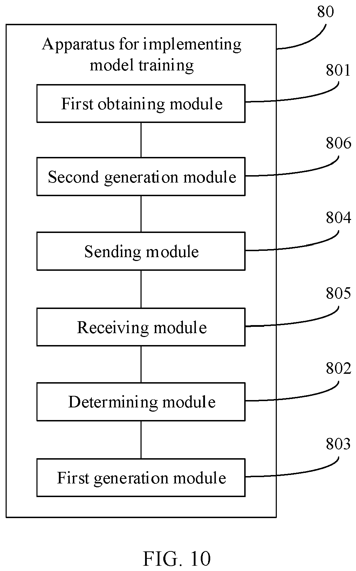

Optionally, as shown in FIG. 10, the apparatus 80 further includes:

a second generation module 806, configured to generate a validity score list of the first feature set based on the validity information, where the validity score list includes a feature identifier and validity indication information of each feature in the first feature set, the validity indication information includes at least one of a validity score and a validity flag, and the validity flag includes a valid feature flag or an invalid feature flag.

The sending module 804 is configured to send the validity score list to the management device.

The receiving module 805 is configured to receive an updated validity score list sent by the management device. The determining module 802 is configured to determine a feature that is in the updated validity score list and whose validity flag is an invalid feature flag as the invalid feature in the first feature set.

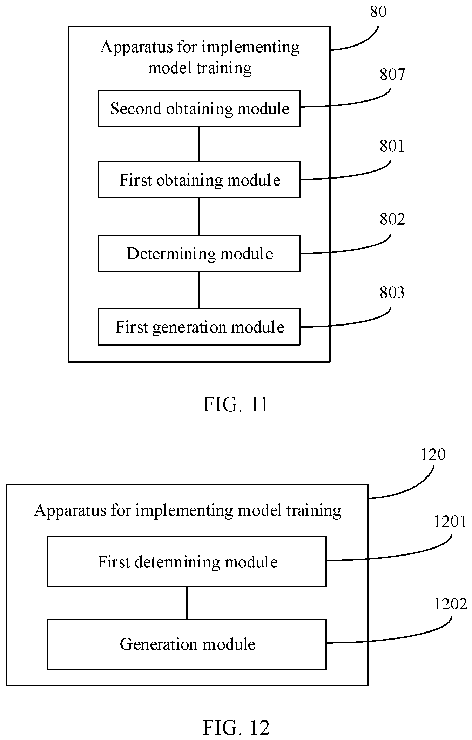

Optionally, as shown in FIG. 11, the apparatus 80 further includes:

a second obtaining module 807, configured to obtain target data, where confidence of a prediction result output by the machine learning model for the target data is less than a confidence threshold. The first obtaining module 801 is configured to determine validity information of the first feature set based on the target data.

Optionally, the first generation module is configured to:

determine a pattern characteristic of sample data, where the pattern characteristic represents at least one of a distribution characteristic and a statistic characteristic of the sample data, and the sample data is collected after the machine learning model deteriorates; generate a third feature set, where the third feature set includes a feature corresponding to the pattern characteristic of the sample data; and delete the invalid feature from the third feature set to obtain the second feature set.

Optionally, in the process where the analysis device generates the second feature set that does not include the invalid feature via the first generation module, the analysis device may send the third feature set to the management device via the sending module 804, and receive, via the receiving module 805, an updated third feature set sent by the management device.

In this embodiment of this application, unsupervised feature validity determining is implemented. After the machine learning model deteriorates, the invalid feature in the feature set may be determined based on the validity score of the feature calculated based on correlation between the features, without using labeled data to calculate a correlation degree between a feature and a label. Therefore, there is no need to label the sample data in the feature set update process. This reduces manual intervention in the feature set update process, improves feature set update efficiency, and further improves model retraining efficiency. In addition, after the machine learning model deteriorates, the pattern characteristic of the sample data is determined, and a feature set corresponding to the pattern characteristic of the sample data is generated. Because the pattern characteristic of the sample data can represent the distribution characteristic and/or the statistic characteristic of the sample data, reliability of predicting to-be-predicted data by using the feature in the feature set is relatively high. In this embodiment of this application, there is no need to extract a new feature from a feature library based on expert experience. This further reduces manual intervention, and implements automatic model update.

FIG. 12 is a schematic structural diagram of an apparatus for implementing model training according to another embodiment of this application. The apparatus may be used in the analysis device 101 in the application scenario shown in FIG. 1. As shown in FIG. 12, the apparatus 120 includes:

a first determining module 1201, configured to determine a pattern characteristic of sample data, where the pattern characteristic represents at least one of a distribution characteristic and a statistic characteristic of the sample data; and

a generation module 1202, configured to generate a target feature set, where the target feature set includes a feature corresponding to the pattern characteristic of the sample data, the feature in the target feature set is used to train a machine learning model, and the machine learning model is used to predict to-be-predicted data collected by a network device.

In this embodiment of this application, the pattern characteristic of the sample data is determined, and a feature set corresponding to the pattern characteristic of the sample data is generated. Because the pattern characteristic of the sample data can represent a distribution characteristic and/or a statistic characteristic of the sample data, reliability of predicting the to-be-predicted data by using the feature set is relatively high. In this embodiment of this application, a correlation degree between each feature in a feature library and a label does not need to be calculated by using labeled sample data to generate a feature set. Therefore, there is no need to label the sample data in a feature set generation process. This reduces manual intervention in a model training process, and improves model training efficiency.

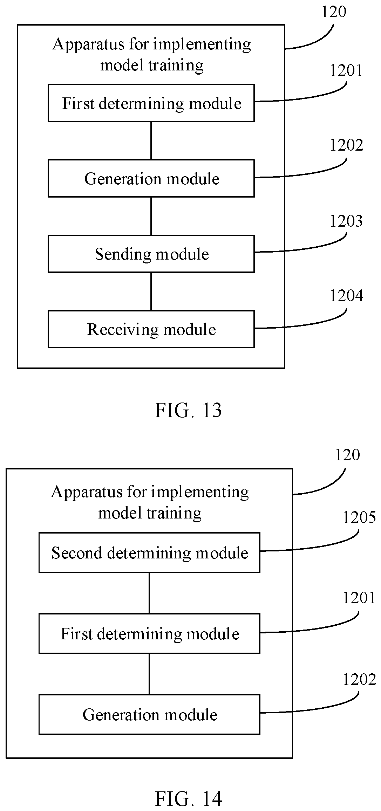

Optionally, as shown in FIG. 13, the apparatus 120 further includes:

a sending module 1203, configured to send the target feature set to a management device; and

a receiving module 1204, configured to receive an updated target feature set sent by the management device.

Optionally, as shown in FIG. 14, the apparatus 120 further includes:

a second determining module 1205, configured to determine that the machine learning model deteriorates, where the sample data is collected after the machine learning model deteriorates.

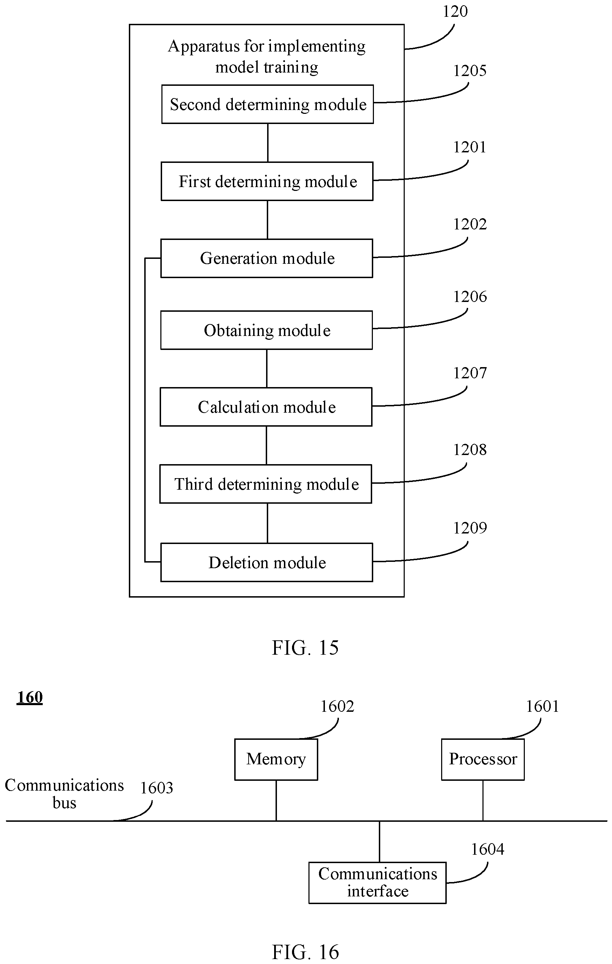

Optionally, as shown in FIG. 15, the apparatus 120 further includes:

an obtaining module 1206, configured to obtain a first feature set used for training to obtain the machine learning model that deteriorates;

a calculation module 1207, configured to calculate a validity score of each feature in the first feature set, where a validity score of a feature is negatively related to correlation of the feature with another feature in the first feature set;

a third determining module 1208, configured to determine an invalid feature in the first feature set based on the validity score of each feature in the first feature set; and

a deletion module 1209, configured to delete an invalid feature from the target feature set to obtain a second feature set, where the second feature set is used to retrain the machine learning model that deteriorates.

In this embodiment of this application, the pattern characteristic of the sample data is determined, and the feature set corresponding to the pattern characteristic of the sample data is generated. Because the pattern characteristic of the sample data can represent the distribution characteristic and/or the statistic characteristic of the sample data, reliability of predicting the to-be-predicted data by using the feature set is relatively high. In this embodiment of this application, the correlation degree between each feature in the feature library and a label does not need to be calculated by using labeled sample data to generate a feature set. Therefore, there is no need to label the sample data in the feature set generation process. This reduces manual intervention in the model training process, and improves model training efficiency. In addition, in this embodiment of this application, unsupervised feature validity determining is implemented. After the machine learning model deteriorates, the invalid feature in the feature set may be determined based on the validity score of the feature calculated based on correlation between the features, without using the labeled data to calculate a correlation degree between a feature and a label. Therefore, there is no need to label the sample data in the feature set update process. This reduces manual intervention in the feature set update process, improves feature set update efficiency, and further improves model retraining efficiency.

FIG. 16 is a block diagram of an apparatus for implementing model training according to an embodiment of this application. The apparatus for implementing model training may be an analysis device. As shown in FIG. 16, the analysis device 160 includes a processor 1601 and a memory 1602.

The memory 1601 is configured to store a computer program, and the computer program includes program instructions.

The processor 1602 is configured to invoke the computer program to implement the method for implementing model training shown in FIG. 2.

Optionally, the network device 160 further includes a communications bus 1603 and a communications interface 1604.

The processor 1601 includes one or more processing cores, and the processor 1601 executes various function applications and data processing by running the computer program.

The memory 1602 may be configured to store the computer program. Optionally, the memory may store an operating system and an application program unit required by at least one function. The operating system may be an operating system such as a real-time operating system (Real Time eXecutive, RTX), Linux, Unix, Windows, or OS X.

There may be a plurality of communications interfaces 1604. The communications interface 1604 is configured to communicate with another storage device or a network device. For example, in this embodiment of this application, the communications interface 1604 may be configured to receive sample data sent by a network device in a communications network.

The memory 1602 and the communications interface 1604 each are connected to the processor 1601 through the communications bus 1603.

An embodiment of this application provides a computer storage medium. The computer storage medium stores instructions. When the instructions are executed by a processor, the method for implementing model training shown in FIG. 2 is implemented.

A person of ordinary skill in the art may understand that all or some of the steps of the foregoing embodiments may be implemented by hardware, or may be implemented by a program instructing related hardware. The program may be stored in a computer-readable storage medium, and the foregoing storage medium may be a readonly memory, a magnetic disk, an optical disc, or the like.

In this embodiment of this application, the terms "first", "second", and "third" are merely used for description, but cannot be understood as indicating or implying relative importance. Unless otherwise explicitly limited, the term "at least one" refers to one or more, and the term "a plurality of" refers to two or more.

The term "and/or" in this application describes only an association relationship between associated objects and indicates that there may be three relationships. For example, A and/or B may indicate the following three cases: Only A exists, both A and B exist, and only B exists. In addition, the character "/" in this specification generally indicates an "or" relationship between associated objects.

The foregoing descriptions are merely optional embodiments of this application, and are not intended to limit this application. Any modification, equivalent replacement, improvement, or the like made within the concept and principle of this application shall fall within the protection scope of this application.

**Claims**

1. A method for implementing model training, wherein the method comprises:

obtaining validity information of a first feature set when a machine learning model deteriorates, wherein the first feature set comprises a plurality of features used for training to obtain the machine learning model, the validity information comprises a validity score of each feature in the first feature set, and a validity score of a feature is negatively related to correlation of the feature with another feature in the first feature set; determining an invalid feature in the first feature set based on the validity information; and generating a second feature set that does not comprise the invalid feature, wherein the second feature set is used to retrain the machine learning model.

2. The method according to claim 1, wherein the validity score of the feature is obtained based on mutual information of the feature relative to all other features in the first feature set.

3. The method according to claim 1 or 2, wherein the invalid feature comprises a feature whose validity score is less than a score threshold in the first feature set.

4. The method according to claim 3, wherein the score threshold is calculated based on one or more of a mean of validity scores of all features in the first feature set, a variance of validity scores of all features in the first feature set, and a standard deviation of validity scores of all features in the first feature set.

5. The method according to any one of claims 1 to 4, wherein after the obtaining validity information of a first feature set, the method further comprises:

generating a validity score list of the first feature set based on the validity information, wherein the validity score list comprises a feature identifier and validity indication information of each feature in the first feature set, the validity indication information comprises at least one of a validity score and a validity flag, and the validity flag comprises a valid feature flag or an invalid feature flag; and sending the validity score list to a management device.

6. The method according to claim 5, wherein the validity indication information comprises the validity score and the validity flag, and the method further comprises:

receiving an updated validity score list sent by the management device; and the determining an invalid feature in the first feature set based on the validity information comprises: determining a feature that is in the updated validity score list and whose validity flag is an invalid feature flag as the invalid feature in the first feature set.

7. The method according to any one of claims 1 to 6, wherein before the obtaining validity information of a first feature set, the method further comprises:

obtaining target data, wherein confidence of a prediction result output by the machine learning model for the target data is less than a confidence threshold; and the obtaining validity information of a first feature set comprises: determining the validity information of the first feature set based on the target data.

8. The method according to any one of claims 1 to 7, wherein the generating a second feature set that does not comprise the invalid feature comprises:

determining a pattern characteristic of sample data, wherein the pattern characteristic represents at least one of a distribution characteristic and a statistic characteristic of the sample data, and the sample data is collected after the machine learning model deteriorates; generating a third feature set, wherein the third feature set comprises a feature corresponding to the pattern characteristic of the sample data; and deleting the invalid feature from the third feature set to obtain the second feature set.

9. The method according to claim 8, wherein after the generating a third feature set, the method further comprises:

sending the third feature set to the management device; and receiving an updated third feature set sent by the management device.

**10.** A method for implementing model training, wherein the method comprises:

determining a pattern characteristic of sample data, wherein the pattern characteristic represents at least one of a distribution characteristic and a statistic characteristic of the sample data; and
generating a target feature set, wherein the target feature set comprises a feature corresponding to the pattern characteristic of the sample data, the feature in the target feature set is used to train a machine learning model, and the machine learning model is used to predict to-be-predicted data collected by the network device.

**11.** The method according to claim 10, wherein after the generating a target feature set, the method further comprises:

sending the target feature set to a management device; and
receiving an updated target feature set sent by the management device.

**12.** The method according to claim 10 or 11, wherein before the determining a pattern characteristic of sample data, the method further comprises:
determining that the machine learning model deteriorates, wherein the sample data is collected after the machine learning model deteriorates.

**13.** The method according to claim 12, wherein after the determining that the machine learning model deteriorates, the method further comprises:

obtaining a first feature set used for training to obtain the machine learning model that deteriorates;
calculating a validity score of each feature in the first feature set, wherein a validity score of a feature is negatively related to correlation of the feature with another feature in the first feature set;
determining an invalid feature in the first feature set based on the validity score of each feature in the first feature set; and
deleting an invalid feature from the target feature set to obtain a second feature set, wherein the second feature set is used to retrain the machine learning model that deteriorates.

**14.** An apparatus for implementing model training, wherein the apparatus comprises:

a first obtaining module, configured to: obtain validity information of a first feature set when a machine learning model deteriorates, wherein the first feature set comprises a plurality of features used for training to obtain the machine learning model, the validity information comprises a validity score of each feature in the first feature set, and a validity score of a feature is negatively related to correlation of the feature with another feature in the first feature set;
a determining module, configured to determine an invalid feature in the first feature set based on the validity information; and
a first generation module, configured to generate a second feature set that does not comprise the invalid feature, wherein the second feature set is used to retrain the machine learning model.

**15.** The apparatus according to claim 14, wherein the validity score of the feature is obtained based on mutual information of the feature relative to all other features in the first feature set.

**16.** The apparatus according to claim 14 or 15, wherein the invalid feature comprises a feature whose validity score is less than a score threshold in the first feature set.

**17.** The apparatus according to claim 16, wherein the scoring threshold is calculated based on one or more of a mean of validity scores of all features in the first feature set, a variance of validity scores of all features in the first feature set, and a standard deviation of validity scores of all features in the first feature set.

**18.** The apparatus according to any one of claims 14 to 17, wherein the apparatus further comprises:

a second generation module, configured to generate a validity score list of the first feature set based on the validity information, wherein the validity score list comprises a feature identifier and validity indication information of each feature in the first feature set, the validity indication information comprises at least one of a validity score and a validity flag, and the validity flag comprises a valid feature flag or an invalid feature flag; and
a sending module, configured to send the validity score list to a management device.

**19.** The apparatus according to claim 18, wherein the validity indication information comprises the validity score and the validity flag, and the apparatus further comprises:

a receiving module, configured to receive an updated validity score list sent by the management device; and the determining module is configured to:
determine a feature that is in the updated validity score list and whose validity flag is an invalid feature flag as the invalid feature in the first feature set.

**20.** The apparatus according to any one of claims 14 to 19, wherein the apparatus further comprises:

a second obtaining module, configured to obtain target data, wherein confidence of a prediction result output by the machine learning model for the target data is less than a confidence threshold; and
the first obtaining module is configured to determine the validity information of the first feature set based on the target data.

**21.** The apparatus according to any one of claims 14 to 20, wherein the first generation module is configured to:

determine a pattern characteristic of sample data, wherein the pattern characteristic represents at least one of a distribution characteristic and a statistic characteristic of the sample data, and the sample data is collected after the machine learning model deteriorates;
generate a third feature set, wherein the third feature set comprises a feature corresponding to the pattern characteristic of the sample data; and
delete the invalid feature from the third feature set to obtain the second feature set.

**22.** An apparatus for implementing model training, wherein the apparatus comprises:

a first determining module, configured to determine a pattern characteristic of sample data, wherein the pattern characteristic represents at least one of a distribution characteristic and a statistic characteristic of the sample data; and
a generation module, configured to generate a target feature set, wherein the target feature set comprises a feature corresponding to the pattern characteristic of the sample data, the feature in the target feature set is used to train a machine learning model, and the machine learning model is used to predict to-be-predicted data collected by the network device.

**23.** The apparatus according to claim 22, wherein the apparatus further comprises:

a sending module, configured to send the target feature set to a management device; and
a receiving module, configured to receive an updated target feature set sent by the management device.

**24.** The apparatus according to claim 22 or 23, wherein the apparatus further comprises:
a second determining module, configured to determine that the machine learning model deteriorates, wherein the sample data is collected after the machine learning model deteriorates.

**25.** The apparatus according to claim 24, wherein the apparatus further comprises:

an obtaining module, configured to obtain a first feature set used for training to obtain the machine learning model that deteriorates;
a calculation module, configured to calculate a validity score of each feature in the first feature set, wherein a validity score of a feature is negatively related to correlation of the feature with another feature in the first feature set;
a third determining module, configured to determine an invalid feature in the first feature set based on the validity score of each feature in the first feature set; and
a deletion module, configured to delete an invalid feature from the target feature set to obtain a second feature set, wherein the second feature set is used to retrain the machine learning model that deteriorates.

**26.** An apparatus for implementing model training, comprising a processor and a memory, wherein

the memory is configured to store a computer program, and the computer program comprises program instructions; and

the processor is configured to invoke the computer program to implement the method for implementing model training according to any one of claims 1 to 13.

27. A computer storage medium, wherein the computer storage medium stores instructions, and when the instructions are executed by a processor, the method for implementing model training according to any one of claims 1 to 13 is implemented.

EP 3 968 243 A1

FIG. 1

22

Identify a pattern characteristic of sample data — 201

Generate a first feature set, where the first feature set includes a feature corresponding to the pattern characteristic of the sample data — 202

Obtain a machine learning model through training by using the first feature set — 203

Obtain validity information of the first feature set when the machine learning model deteriorates — 204

Determine an invalid feature in the first feature set based on the validity information of the first feature set — 205

Generate a second feature set that does not include the invalid feature — 206

Retrain the machine learning model by using the second feature set, to obtain an updated machine learning model — 207

FIG. 2

FIG. 3

FIG. 4

| Moving average | Weighted moving average | Exponential moving average | Double exponential moving average | Triple exponential moving average | Seasonality | Trend | Noise | Binned entropy | Year-on-year |
|---|---|---|---|---|---|---|---|---|---|
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |
| 187 | 187 | 187 | 187 | 187 | 289 | 10.95445115 | 3.116666667 | 15.62103283 | 1 |

EP 3 968 243 A1

| Moving average | Weighted moving average | Exponential moving average | Double exponential moving average | Triple exponential moving average | Seasonality | Trend | Noise | Binned entropy | Year-on-year |
|---|---|---|---|---|---|---|---|---|---|
| 189 | 187 | 187 | 187 | 187 | 289.0330579 | 10.83818492 | 3.133333333 | 15.6219784 | 0.363636364 |
| 189 | 187 | 187 | 187 | 187 | 289.0330579 | 10.83818492 | 3.15 | 15.62242511 | 1.632978723 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |

26

| Moving average | Weighted moving average | Exponential moving average | Double exponential moving average | Triple exponential moving average | Seasonality | Trend | Noise | Binned entropy | Year-on-year |
|---|---|---|---|---|---|---|---|---|---|
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |
| 189 | 187 | 187 | 187 | 187 | 289.0330579 | 10.83818492 | 3.15 | 15.62242511 | 1 |

FIG. 5

| Extract feature data of each feature in a first feature set from first data | 2041 |

↓

| Perform discretization processing on the feature data of each feature to obtain a discrete feature value of each feature | 2042 |

↓

| Use an information entropy principle to calculate a validity score of each feature based on discrete feature values of all features in the first feature set | 2043 |

FIG. 6

| Determine a pattern characteristic of second data | 2061 |

↓

| Generate a third feature set, where the third feature set includes a feature corresponding to the pattern characteristic of the second data | 2062 |

↓

| Delete an invalid feature from the third feature set to obtain a second feature set | 2063 |

FIG. 7

80

Apparatus for implementing model training

801

First obtaining module

802

Determining module

803

First generation module

FIG. 8

80

Apparatus for implementing model training

801

First obtaining module

802

Determining module

803

First generation module

804

Sending module

805

Receiving module

FIG. 9

80

Apparatus for implementing
model training

801

First obtaining module

806

Second generation module

804

Sending module

805

Receiving module

802

Determining module

803

First generation module

FIG. 10

80

Apparatus for implementing
model training

807

Second obtaining module

801

First obtaining module

802

Determining module

803

First generation module

FIG. 11

120

Apparatus for implementing model training

1201

First determining module

1202

Generation module

FIG. 12

120

Apparatus for implementing
model training

1201

First determining module

1202

Generation module

1203

Sending module

1204

Receiving module

FIG. 13

120

Apparatus for implementing
model training

1205

Second determining module

1201

First determining module

1202

Generation module

FIG. 14

120

Apparatus for implementing
model training

1205

Second determining module

1201

First determining module

1202

Generation module

1206

Obtaining module

1207

Calculation module

1208

Third determining module

1209

Deletion module

FIG. 15

160

1602

Memory

1601

Processor

Communications
bus

1603

1604

Communications
interface

FIG. 16

## INTERNATIONAL SEARCH REPORT

| International application No. |
|---|
| **PCT/CN2020/100308** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N,G06F

Documentation searched other than minimum documentation to the extent that such documents are included in the fields searched

Electronic data base consulted during the international search (name of data base and, where practicable, search terms used)

CNPAT, WPI, EPODOC, CNKI: 模型, 训练, 重, 重新, 样本, 特征, 有效, 无效, 失效, 退化, 劣化, model, training, repeat, sample, feature, effective, degenerat+

**C. DOCUMENTS CONSIDERED TO BE RELEVANT**

| Category* | Citation of document, with indication, where appropriate, of the relevant passages | Relevant to claim No. |
|---|---|---|
| Y | CN 109472318 A (ALIBABA GROUP HOLDING LIMITED) 15 March 2019 (2019-03-15) claims 27-28, description paragraphs [0002]-[0025] | 1-9, 12-21, 24-27 |
| Y | CN 107195020 A (TSINGHUA UNIVERSITY) 22 September 2017 (2017-09-22) description paragraphs [0002], [0013]-[0028] | 1-9, 13-21, 25-27 |
| X | CN 109800887 A (NEUSOFT CORPORATION) 24 May 2019 (2019-05-24) description, paragraphs [0061]-[0078] | 10-11, 22-23 |
| Y | CN 109800887 A (NEUSOFT CORPORATION) 24 May 2019 (2019-05-24) description, paragraphs [0061]-[0078] | 8-9, 12-13, 21, 24-25 |
| A | CN 109871872 A (XI'AN JIAOTONG UNIVERSITY) 11 June 2019 (2019-06-11) entire document | 1-27 |
| A | CN 108962382 A (UNIVERSITY OF ELECTRONIC SCIENCE AND TECHNOLOGY OF CHINA) 07 December 2018 (2018-12-07) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 September 2020** | **12 October 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/100308**

| Patent document cited in search report | | | Publication date (day/month/year) | Patent family member(s) | Publication date (day/month/year) |
|---|---|---|---|---|---|
| CN | 109472318 | A | 15 March 2019 | None | |
| CN | 107195020 | A | 22 September 2017 | None | |
| CN | 109800887 | A | 24 May 2019 | None | |
| CN | 109871872 | A | 11 June 2019 | None | |
| CN | 108962382 | A | 07 December 2018 | None | |

Form PCT/ISA/210 (patent family annex) (January 2015)